# EUROPÄISCHE PATENTSCHRIFT

(11) **EP 3 155 276 B1**
(45) Veröffentlichungstag und Bekanntmachung des Hinweises auf die Patenterteilung: **27.02.2019**
(21) Anmeldenummer: 15725657.9
(22) Anmeldetag: 02.06.2015
(51) Int. Cl.: F16D 7/08, F16D 43/206

(54) **FREISCHALTENDE ÜBERLASTKUPPLUNG MIT EINRASTUNG DURCH MAGNETISCH BEAUFSCHLAGTE STEUER-ELEMENTE**
DISENGAGING OVERLOAD CLUTCH WITH LATCHING BY WAY OF MAGNETICALLY LOADED CONTROL ELEMENTS
ACCOUPLEMENT À SURCHARGE LIBÉRABLE AVEC ENCLIQUETAGE PAR DES ÉLÉMENTS DE COMMANDE MAGNÉTIQUE

(30) Priorität: 11.06.2014 DE 102014008800
(43) Veröffentlichungstag der Anmeldung: 19.04.2017
(73) Patentinhaber: Chr. Mayr GmbH + Co. KG, 87665 Mauerstetten (DE)
(72) Erfinder: VOGL, Norbert, 86935 Rott (DE)
(74) Vertreter: Ruschke, Hans Edvard
(86) Internationale Anmeldenummer: PCT/EP2015/062272
(87) Internationale Veröffentlichungsnummer: WO 2015/189071

(56) Entgegenhaltungen:
- EP-A1- 2 613 068
- CN-Y- 2 430 574
- DE-A1- 2 517 910
- DE-A1- 3 727 484
- US-A- 4 199 964
- US-A- 4 220 230

## Beschreibung

Im Bereich der industriellen Antriebstechnik hat sich die mechanische Überlastkupplung als zuverlässiges Maschinenelement zur Vermeidung von Schäden durch überhöhte Drehmomente etabliert.

In Abhängigkeit vom jeweiligen Anwendungsfall werden bei mechanischen Überlastkupplungen verschiedene Funktionskonzepte realisiert:
- Durchrastkupplungen für einfachere Antriebe.
- Synchronkupplungen mit winkelgetreuem Wiedereinrastwinkel.
- Freischaltkupplungen mit manueller Wiederinbetriebnahme.
- Freischaltkupplungen mit automatischer Wiederinbetriebnahme.

Gegenstand der hier vorgestellten Erfindung ist eine technische Verbesserung für Freischaltkupplungen mit automatischer Wiederinbetriebnahme nach dem Oberbegriff des Hauptanspruches.

Aus dem Stand der Technik sind Freischaltkupplungen bekannt, bei denen die Wiederinbetriebnahme nach dem Ansprechen der Kupplung durch langsame Rückwärtsdrehung zwischen An- und Abtriebsseite erfolgt.

Eine derartige Freischaltkupplung wird in DE 37 27 484 C2 offenbart. Bei dieser Freischaltkupplung nach dem Stand der Technik erfolgt die Drehmomentübertragung ausgehend von einem (hier als Druckflansch bezeichneten) Antriebselement über ein sogenanntes Schaltteil auf ein im Folgenden als Nabe bezeichnetes Abtriebselement. Dabei ist das Schaltteil über eine Profilverzahnung drehfest aber axial beweglich mit der Nabe verbunden.

Für die Drehmomentübertragung dienen erste Kugeln als Übertragungskörper, die auf einem äußeren Teilkreis und vorzugsweise mit gleichen Abständen zueinander in einem Kugelkäfig geführt sind. Die als Übertragungskörper dienenden ersten Kugeln werden dabei durch ein auf der Nabe zentriertes Federelement in den kegelförmigen Ausnehmungen in Druckflansch und Schaltteil gehalten.

Beim Ansprechen (also: Ausrasten) der Kupplung durch Überschreiten eines bestimmten durch die Kraft des Federelementes definierten Drehmoments wandern die ersten Kugeln aus den kegelförmigen Ausnehmungen in Druckflansch und Schaltteil heraus und führen dabei auf den Oberflächen der Ausnehmungen eine Wälzbewegung aus. Durch diese Wälzbewegung erfolgt eine Verdrehung zwischen dem Kugelkäfig (mit den darin befindlichen ersten Kugeln) und dem Schaltteil sowie zwischen dem Kugelkäfig und dem Druckflansch.

Auf einem separaten inneren Teilkreis des Kugelkäfigs sind Stützkugeln angeordnet, die nach der Verdrehung zwischen dem Kugelkäfig und dem Schaltteil in spezielle Stützausnehmungen des Schaltteiles eintreten und dadurch ein Wiedereinrasten der Freischaltkupplung verhindern.

Zur Wiederinbetriebnahme der Freischaltkupplung dienen sogenannte Anschlagkörper, im Folgenden als Steuerbolzen bezeichnet, die im vorbekannten Stand der Technik durch die Kraft von Federelementen in Richtung auf das Schaltteil beaufschlagt sind, auf einem Teilkreis in Bohrungen des Druckflansches geführt sind und auf einer mit Rampen versehenen Steuerkurve des Schaltteiles gleiten.

Nach dem Ausrasten der Freischaltkupplung befinden sich das Schaltteil und der Kugelkäfig in einer relativen Winkelposition zueinander, bei der die Steuerbolzen während des Auslaufens der Freischaltkupplung auf der Steuerkurve und den Rampen des Schaltteiles gleiten.

Nach dem Stillstand der Kupplung und nach dem Beseitigen der Ursache der Störung (der Überlast) wird die Drehrichtung zwischen Druckflansch und Schaltteil umgekehrt und es erfolgt eine langsame Rückwärtsdrehung zwischen den beiden genannten Teilen. Dabei wird der Kugelkäfig mit den ersten und zweiten Kugeln durch das Zusammenwirken von Druckflansch, Steuerbolzen, Schaltteil und Mitnehmerflanken des Kugelkäfigs wieder in die ursprüngliche Ausgangsposition verdreht, die Freischaltkupplung rastet ein und ist wieder betriebsbereit.

Nachteilig an der Freischaltkupplung nach dem voranstehend beschriebenen Stand der Technik nach der DE 37 27 484 ist der permanente Kontakt zwischen den federbelasteten Steuerbolzen und dem Schaltteil sowie dem Kugelkäfig. Dadurch entsteht insbesondere bei langen Auslaufzeiten der Freischaltkupplung nach dem Ausrasten aufgrund einer Überlast ein starker Verschleiß an den Steuerbolzen und an den mit den Steuerbolzen in Wirkverbindung stehenden Teilen, insbesondere dem Schaltteil und dem Kugelkäfig. Außerdem entsteht vor allem beim Kontakt zwischen den Steuerbolzen und den Rampen des Schaltteiles bei höheren Drehzahlen eine erhebliche Geräuschentwicklung.

Aufgabe der vorliegenden Erfindung ist es hiernach, ausgehend vom oben genannten Stand der Technik, eine Freischaltkupplung anzugeben, bei der der Verschleiß zwischen den Steuerbolzen und den damit in Wirkverbindung stehenden Teilen der Kupplung deutlich verringert sowie gleichzeitig die damit einhergehende Geräuschentwicklung stark reduziert ist.

Diese Aufgabe wird durch eine Freischaltkupplung nach den Merkmalen des Anspruches 1 gelöst.

Dabei wird vorgeschlagen, den oder die Steuerbolzen der Freischaltkupplung nicht wie bisher mit Federelementen sondern durch die Kraft von speziell angeordneten Permanentmagneten gegen die mit den Steuerbolzen in Wirkverbindung stehenden Teile der Kupplung zu drücken. Dazu wird erfindungsgemäß vorgesehen, den oder die Steuerbolzen an deren vom Schaltteil abgewandten Ende(n) mit ersten Permanentmagneten zu versehen und diesen ersten Permanentmagneten mit der Nabe fest verbundene zweite Permanentmagnete gegenüber zu stellen, wobei die ersten und zweiten Permanentmagnete so gepolt sind, dass sie sich gegenseitig abstoßen.

Zweckmäßigerweise sind der oder die winkelfest mit der Nabe verbundenen zweiten Permanentmagneten nur in solchen Winkelpositionen angeordnet, in der durch das funktionale Zusammenwirken zwischen dem Steuerbolzen und dem Schaltteil eine Wiedereinrastung der Freischaltkupplung möglich ist.

In allen anderen Winkelpositionen ist die den ersten Permanentmagneten der Steuerbolzen gegenüberliegende Fläche so beschaffen, dass eine Anziehung gegenüber dieser erfolgt. Dies kann dadurch erreicht werden, dass diese Fläche einfach aus einem ferromagnetischen Werkstoff besteht, oder dass auf dieser Fläche weitere dritte Permanentmagnete angeordnet sind, die jedoch gegenüber den ersten Permanentmagneten der Steuerbolzen entgegengesetzt gepolt sind und diese somit anziehen.

Durch diese Konstellation werden der oder die mit den ersten Permanentmagneten bestückten Steuerbolzen in den jeweiligen Winkellagen, in denen eine Wiedereinrastung der Freischaltkupplung durch das Zusammenwirken von Steuerbolzen und Schaltteil nicht möglich ist, zum Schaltteil auf Abstand gehalten, so dass dabei keine Berührung stattfindet und somit kein Verschleiß und keine Geräuschentwicklung stattfinden kann.

In einer besonders zweckmäßigen Ausgestaltung der erfindungsgemäßen Freischaltkupplung sind der oder die zweiten mit der Nabe winkelfest verbundenen zweiten Permanentmagneten in Umfangsrichtung so schmal gestaltet wie dies für eine einwandfreie Funktion gerade notwendig ist. Dadurch wird erreicht, dass bei einem Auslauf der Freischaltkupplung nur über einen sehr kurzen Drehwinkel eine Abstoßungskraft zwischen den ersten und den zweiten Permanentmagneten wirksam ist und dass die Bewegung der Steuerbolzen vor allem beim Auslaufen aus hohen Drehzahlen diesem kurzen Kraftimpuls nicht folgen kann. Das führt schließlich dazu, dass die Steuerbolzen bei hohen Drehzahlen keinerlei Berührung zu den Teilen mehr haben, mit denen sie bei der Wiedereinrastung der Freischaltkupplung zusammenwirken, und dass die Steuerbolzen somit absolut verschleißfrei und geräuschlos laufen.

Aus der DE 42 15 853 A1 und der JP H07-27 143 A sind Überlastkupplungen bekannt, die mittels Magneten so gesteuert werden, dass nach Überschreiten des Grenzdrehmomentes die Kupplung frei durchdrehen kann bzw. das Wiedereinkuppeln der Überlastkupplung ermöglicht wird. Diese Druckschriften geben aber keinerlei Hinweise dahingehend, die Steuerbolzen wie bei der vorliegenden Erfindung mittels Bolzenmagneten und davon getrennt angeordneten Steuermagneten zu beeinflussen bzw. zu beaufschlagen.
Die CN 2430574 zeigt eine Ratsche, d. h. eine von vier Klinken kontrollierte Überholkupplung mit einem zylindrischen Innenteil, in dem die Klinken radial verschieblich und nach außen beaufschlagt geführt sind. Das Innenteil wird von einem Ringteil umfasst, das eine Innenzahnung aufweist, die mit den Klinken kooperiert und eine Drehmomentübertragung nur in einer Drehrichtung zulässt, in der anderen Drehrichtung aber frei durchratscht. Die Klinken werden durch eine magnetische Federanordnung radial nach außen beaufschlagt, nämlich durch jeweils zwei in den vier Führungen im zylindrischen Innenteil vorgesehene Permanentmagnete, bei denen die gleichnamigen Pole einander zugewandt sind.

Weitere technischen Details der Erfindung ergeben sich aus den nachfolgenden Beschreibungen der bevorzugten Ausführungsformen der erfindungsgemäßen Freischaltkupplung.

Es zeigen:
**Fig. 1** einen Längsschnitt durch eine Kupplung im eingerasteten Zustand, die, aufbauend auf dem Stand der Technik, mit den zusätzlichen Merkmalen dieser Erfindung ausgerüstet ist,
**Fig. 2** einen Längsschnitt A-A durch die Kupplung aus Fig.1,
**Fig. 3** einen Querschnitt B-B durch die Kupplung aus Fig. 1,
**Fig. 4** eine Ansicht analog zu Fig. 1, allerdings zusätzlich mit Rückhaltemagneten bestückt, die in Umfangsrichtung benachbart zum Steuermagnet angeordnet sind, wie aus den Schnitten C-C und D-D ersichtlich
**Fig. 5** einen Längsschnitt C-C durch die Kupplung aus Fig.4,
**Fig. 6** einen Querschnitt D-D durch die Kupplung aus Fig. 4,
**Fig. 7** einen Längsschnitt durch eine Kupplung mit jeweils zwei Zylinderrollen zur Drehmomentübertragung und zusätzlich mit den Merkmalen der Erfindung ausgerüstet, wobei die Darstellung die Kupplung im eingerasteten Zustand zeigt,
**Fig. 8** einen Längsschnitt E-E durch die Kupplung aus Fig.7,
**Fig. 9** einen weiteren Längsschnitt F-F durch die Kupplung aus Fig. 7,
**Fig. 10** einen weiteren Längsschnitt durch eine Kupplung, die mit jeweils zwei Zylinderrollen zur Drehmomentübertragung und zusätzlich mit den Merkmalen der Erfindung ausgerüstet ist, wobei die Darstellung die Kupplung im eingerasteten Zustand zeigt,
**Fig. 11** einen Querschnitt G-G durch die Kupplung aus Fig. 10,
**Fig. 12** eine Explosionsdarstellung der Kupplung aus Fig. 10,
**Fig. 13** einen Längsschnitt durch eine Kupplung mit Zylinderrollen zur Drehmomentübertragung, die zusätzlich mit den Merkmalen der Erfindung ausgerüstet ist, wobei die Darstellung die Kupplung im ausgerasteten Zustand zeigt,
**Fig. 14** einen Längsschnitt H-H durch die Kupplung aus Fig.13,
**Fig. 15** einen weiteren Längsschnitt J-J durch die Kupplung aus Fig. 13,
**Fig. 16** einen weiteren Längsschnitt durch eine Kupplung mit Zylinderrollen zur Drehmomentübertragung, die zusätzlich mit den Merkmalen der Erfindung ausgerüstet ist, wobei die Darstellung die Kupplung im ausgerasteten Zustand zeigt,
**Fig. 17** einen Längsschnitt K-K durch die Kupplung aus Fig.16,
**Fig. 18** einen weiteren Längsschnitt L-L durch die Kupplung aus Fig. 16.

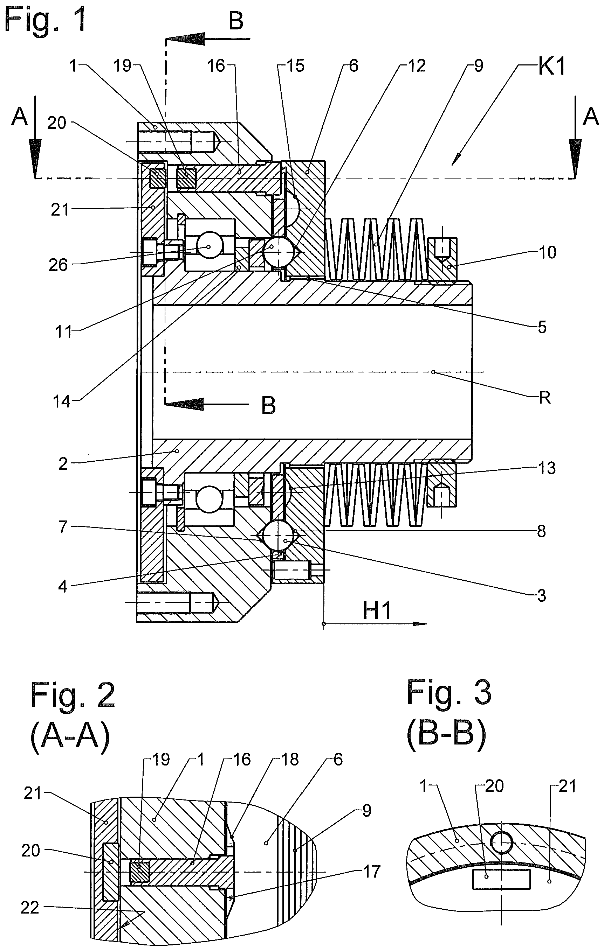

In **Fig. 1, Fig. 2** und **Fig. 3** ist eine Freischaltkupplung (K1) dargestellt, die bezüglich des Grundkonzeptes der eingangs beschriebenen Kupplung nach dem Stand der Technik entspricht, die jedoch zusätzlich die Merkmale der vorliegenden Erfindung aufweist.

Diese grundsätzliche Funktion dieser Freischaltkupplung (K1) entspricht bezüglich der Drehmomentübertragung und des Ausrastens dem Stand der Technik, wie er aus der DE37 27 484 C2 bekannt ist: Demnach erfolgt die Drehmomentübertragung über den Druckflansch (1) und über die in Durchbrüchen des Käfigs (4) geführten Übertragungskörper (3) zum Schaltteil (6), sowie über die Nabenverzahnung (5) auf die Kupplungsnabe (2). Dabei werden die Übertragungskörper (3), hier als Kugeln ausgebildet, durch die Kraft von Federelementen (9) in den Ausnehmungen (7, 8) von Druckflansch (1) und Schaltteil (6) gehalten, wobei die Vorspannung der Federelemente (9) über eine Einstellmutter (10) verstellbar ist.

Beim Ausrasten der Kupplung infolge eines überhöhten Drehmoments bewegen sich die Übertragungskörper (3) in einer Abwälzbewegung aus den hier kegelig geformten Ausnehmungen (7, 8) von Druckflansch (1) und Schaltteil (6) heraus, wodurch sich der Käfig (4) um die Rotationsachse (R) zur Kupplungsnabe (2) verdreht, wodurch auch die in weiteren Durchbrüchen des Käfigs (4) angeordneten und ebenfalls als Kugeln dargestellten Stützkörper (11) aus ihren Stützkörperausnehmungen (12) des Schaltteiles (6) heraustreten, in benachbarte, auf dem selben Teilkreis befindliche Abstützausnehmungen (13) des Schaltteiles (6) eintreten und sich dann auf dem Axiallager (14) gegen die Kraft der Federelemente (9) abstützen. Das Schaltteil (6) führt dabei eine Hubbewegung (H1) aus und die Übertragungskörper (3) treten dabei ebenfalls in Zusatzausnehmungen (15) des Schaltteiles (6) ein, in denen sie durch den Käfig (4) gehalten werden und wodurch sie keine Berührung mit dem Druckflansch (1) mehr haben. Die Kupplung (K1) kann somit bis zum Stillstand der Drehbewegung zwischen Druckflansch (1) und Kupplungsnabe (2) frei auslaufen.

Die Wiedereinrastung der Freischaltkupplung (K1) erfolgt wie im Stand der Technik auch bei der Kupplung mit den Merkmalen der hier vorgestellten Erfindung durch Umkehrung der Drehrichtung zwischen dem Druckflansch (1) und der Kupplungsnabe (2). Dabei treten die in Axialbohrungen des Druckflansches (1) geführten Steuerbolzen (16) in Aktion, die mit einer Steuernut (17) des Käfigs (4) und einer Steuerkurve (18) des Schaltteiles (6) zusammenwirken.

Im Gegensatz zum Stand der Technik werden allerdings die Steuerbolzen (16) bei der erfindungsgemäßen Freischaltkupplung (K1) nicht durch Druckfedern in Kontakt mit dem Käfig (4) und der Steuerkurve (18) des Schaltteiles (6) gehalten, sondern durch die einander abstoßende Kraft von zwei aufeinander einwirkenden Permanentmagneten 19, 20.

Dazu ist auf der dem Schaltteil (6) und dem Käfig (4) abgewandten Seite des Steuerbolzens (16) ein als Bolzenmagnet (19) bezeichneter Permanentmagnet angebracht. Die Beaufschlagung des einen (oder mehrerer) Steuerbolzen(s) 16 zum Schaltteil (6) hin wird dabei dadurch erreicht, dass dem jeweiligen Bolzenmagnet (19) ein (oder mehrere) Steuermagnet(en) 20 gegenüberstehen, die in einer mit der Kupplungsnabe (2) fest verbundenen Steuerscheibe (21) eingebettet sind, und zwar auf dem gleichen Radius wie der/ die Bolzenmagnet(e) 19, wobei der oder die Steuermagnete (20) gegenüber dem Bolzenmagnet (19) so gepolt sind, dass sie diesen abstoßen.

Aus **Fig. 2** und **Fig. 3** ist ersichtlich, dass für jeden der Steuerbolzen (16) eine Anordnung eines Steuermagneten (20) vorgesehen ist, wobei der Steuermagnet (20) auf der Steuerscheibe (21) in Umfangsrichtung der Fig.2/3 gesehen genau in der Winkelposition liegt, in der ein Einrasten der Freischaltkupplung (K1) durch das Zusammenwirken von Steuerbolzen (16), Steuerkurve (18) und Steuernut (17) möglich ist, wie letzteres an sich aus der DE 37 27 484 C2 bekannt ist.

Eine besonders vorteilhafte Ausführungsform des Steuermagneten (20) ist in **Fig. 3** dargestellt, wobei dieser durch einen Rechteckmagneten gebildet wird, dessen Längsseiten in Umfangsrichtung der Freischaltkupplung (K1) orientiert sind, wie dies aus der Fig.3 ersichtlich ist.

Beim Ausrasten der Freischaltkupplung (K1) nach Fig.1 verdreht sich der Druckflansch (1) mit den Steuerbolzen (16) gegenüber der Kupplungsnabe (2) mit der Steuerscheibe (21) und den Steuermagneten (20). Zum einen verlässt der Steuerbolzen (16) dabei den Winkelbereich, in dem durch das Zusammenwirken von Steuerbolzen (16), Steuerkurve (18) und Steuernut (17) eine Wiedereinrastung der Freischaltkupplung (K1) möglich ist, und zum anderen verlässt der Steuerbolzen (16) dabei den eine Abstoßung bewirkenden Einflussbereich des Steuermagneten (20) so weit, bis der Bolzenmagnet (19) der Steuerfläche (22) der vorzugsweise aus ferromagnetischem Material bestehenden Steuerscheibe (21) gegenüber steht und von dieser im Ergebnis angezogen wird.

Dadurch wird erreicht, dass der jeweilige Steuerbolzen (16) nur in derjenigen Winkellage in Kontakt zur Steuerkurve (18) und zur Steuernut (17) gebracht wird, in der eine Wiedereinrastung der Freischaltkupplung (K1) erfolgen kann, wie dies an sich aus dem Stand der Technik nach der DE 37 27 484 bekannt ist.

In allen anderen Winkellagen findet durch die Anziehung zwischen Bolzenmagnet (19) und ferromagnetischen Steuerscheibe (21) keine Berührung zwischen Steuerbolzen (16), Steuerkurve (18) und Steuernut (17) statt, wodurch der Verschleiß und die Geräuschentwicklung der gesamten Kupplung stark verringert werden.

Beim Auslaufen der Kupplung nach dem Ausrasten bei hohen Drehzahlen bewegen sich der Bolzenmagnet (19) und die Anordnung von Steuermagneten (20) sehr schnell aneinander vorbei, wodurch die Abstoßungskraft zwischen den Magneten 19 du 20 nur für eine sehr kurze Zeit wirksam ist, wodurch der oder die Steuerbolzen (16) durch ihre Massenträgheit in der vom Schaltteil (6) und vom Käfig (4) beabstandeten Stellung verbleiben - wodurch ein völlig berührungsloser Auslauf erzielt werden kann.

Erst beim Rückwärtsdrehen von Druckflansch (1) und Kupplungsnabe (2) mit langsamer Geschwindigkeit baut sich zwischen der Anordnung von Steuermagneten (20) und dem gegenüberstehenden Bolzenmagnet (19) eine ausreichende Abstoßungskraft auf, welcher der oder die Steuerbolzen (16) folgen können, um im Zusammenspiel mit der Steuerkurve (18) und der Steuernut (17) eine Wiedereinrastung der Freischaltkupplung (K1) zu bewirken, wie dies an sich im Stand der Technik der DE 32 27 484 C2 bekannt ist.

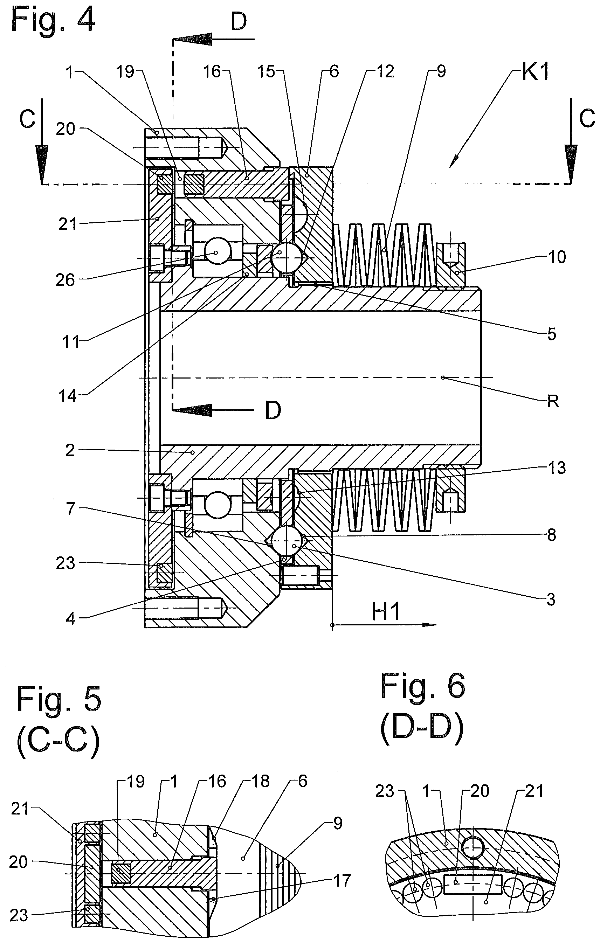

In den **Fig. 4-6** ist eine weiter verbesserte Variante der erfindungsgemäßen Freischaltkupplung (K1) zu sehen. Um das Verhalten der Freischaltkupplung (K1) weiter zu optimieren, kann der neben der Anordnung der Steuermagnete (20) auf demselben Teilkreis liegende Bereich der Steuerscheibe (21) mit zusätzlichen Rückhaltemagneten (23) bestückt werden, die so gepolt sind, dass sie die Bolzenmagnete (19) anziehen. Dies ist insbesondere aus den **Fig. 5** und **Fig. 6** ersichtlich. Durch diese Maßnahme werden die Anziehungskräfte zwischen Bolzenmagneten (19) und der mit den Rückhaltemagneten (23) bestückten Steuerscheibe (21) in den Winkellagen erhöht, in denen die geometrische Konstellation von Steuer-bolzen (16), Steuerkurve (18) und Steuernut (17) keine Wieder-Einrastung der Freischaltkupplung (K1) zulässt. Der berührungslose Auslauf der Freischaltkupplung vor allem bei hohen Drehzahlen wird weiter begünstigt.

Außerdem wird insbesondere beim vertikalen Einbau der FreischaltKupplung (K1) in einer Einbaulage, in der die Steuerbolzen (16) durch ihr Eigengewicht in Richtung zu Steuerkurve (18) und Steuernut (17) bewegt werden, der berührungslose Auslauf der Freischaltkupplung durch die Rückhaltemagneten (23) weiter verbessert.

Weiterhin kann die Freischaltkupplung (K1) je nach konkreter Ausgestaltung der Funktionsteile wie beim eingangs beschriebenen Stand der Technik mit einem oder mehreren Steuerbolzen (16) bestückt sein, von denen jeder mit entsprechenden Bolzenmagneten (19) versehen ist.

Dementsprechend erhöht sich die Zahl der erforderlichen Anordnungen der Steuermagnete (20), der Steuerkurven (18) des Schaltteiles (6) und der Steuernuten (17) des Käfigs (4).

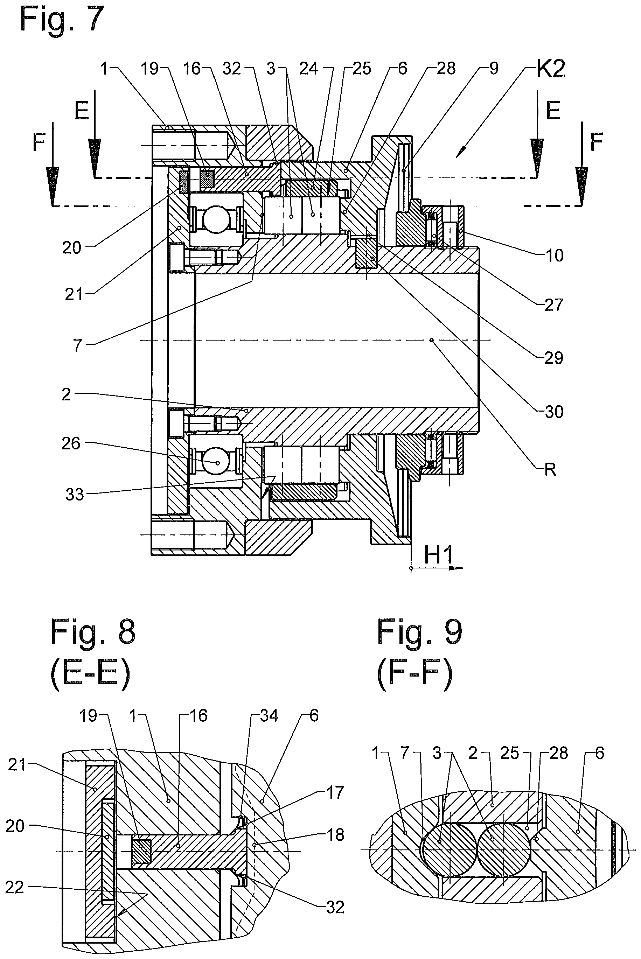

Bei den Darstellungen in **Fig.7, Fig. 8** und **Fig. 9** wird eine weitere Ausführungsform einer Freischaltkupplung (K2) gezeigt, die die Merkmale der Erfindung umfasst. Die Kupplung ist im eingerasteten Zustand dargestellt. Analog zur eingangs beschriebenen Kupplung nach dem Stand der Technik besteht auch die Freischaltkupplung (K2) aus einem angetriebenen und mit keilförmigen Ausnehmungen (7) versehenen Druckflansch (1), von dem ausgehend das Drehmoment mittels Übertragungskörpern (3), hier als Zylinderrollen dargestellt, auf die Nabenausnehmungen (25) der Kupplungsnabe (2) übertragen wird. Druckflansch (1) und Kupplungsnabe (2) sind über ein Kupplungslager (26) drehbar zueinander gelagert.

Die Übertragungskörper (3) werden auch bei dieser Freischaltkupplung (K2) mittels eines durch Federelemente (9) beaufschlagten Schaltteiles (6) in den Ausnehmungen (7) des Druckflansches (1) gehalten, wobei die Vorspannung der Federelemente (9) durch eine Einstellmutter (10) veränderbar ist.

Zwischen der Einstellmutter (10) und den Federelementen (9) ist zusätzlich ein Drucklager (27) vorgesehen, dessen technische Notwendigkeit und Funktion weiter unten erläutert wird.

Das Schaltteil (6) weist an den Kontaktstellen zu den Übertragungskörpern (3) Schaltteilnocken (28) auf, die ihrerseits in axialer Richtung in die Nabenausnehmungen (25) der Kupplungsnabe (2) hineinragen und die durch diesen Formschluss zur Kupplungsnabe (2) dafür sorgen, dass sich Schaltteil (6) und Kupplungsnabe (2) im eingerasteten Zustand der Freischaltkupplung (K2) nicht zueinander verdrehen können.

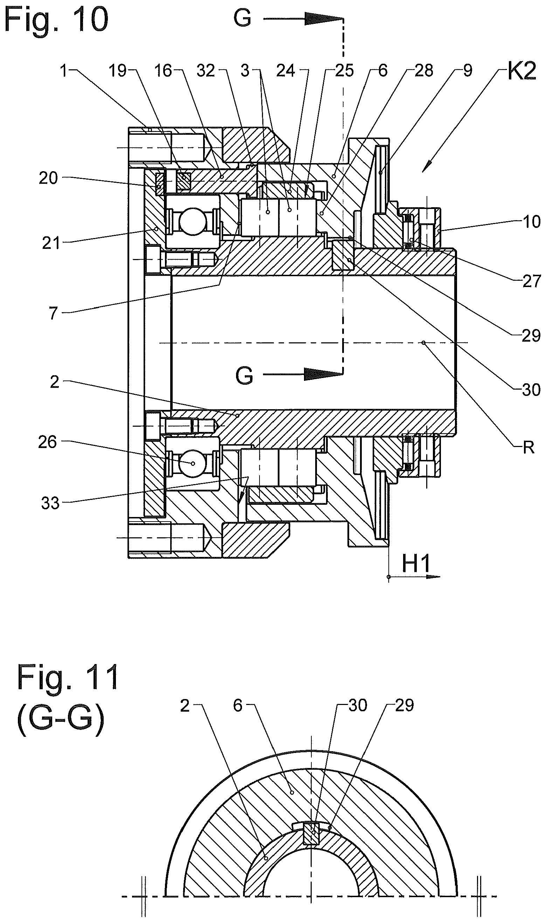

Wie in **Fig. 10** und insbesondere in **Fig. 11** gezeigt, ist das Schaltteil (6) auf seinem Innenumfang mit Schaltteilanschlägen (29) bestückt, die mit den radial angeordneten Anschlagkörpern (30) der Kupplungsnabe (2) korrespondieren und die beim Ausrasten der Freischaltkupplung (K2) nur eine begrenzte Verdrehung zwischen Schaltteil (6) und Kupplungsnabe (2) bezogen auf die Rotationsachse (R) der Freischaltkupplung (K2) zulassen.

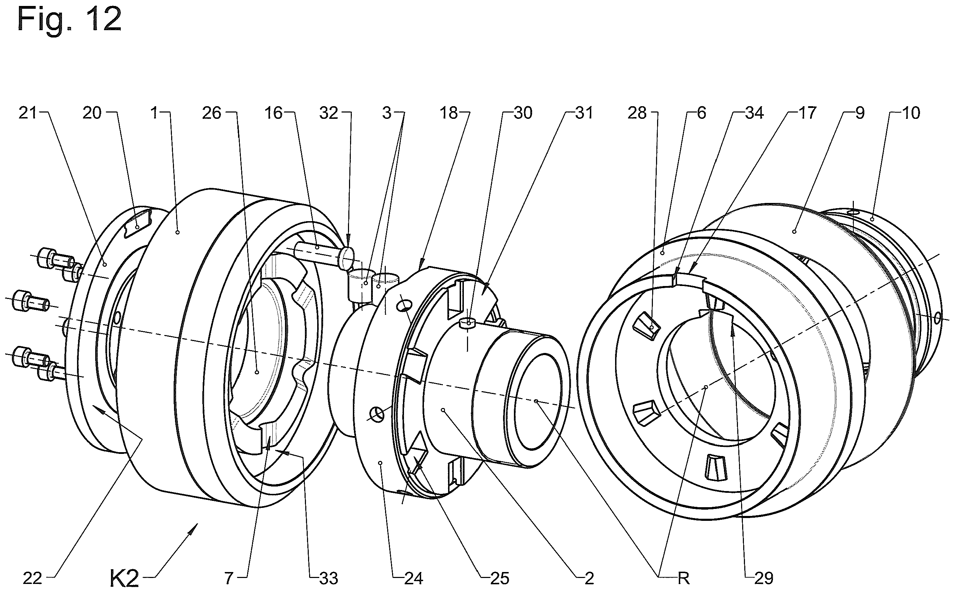

**Fig. 12** zeigt nochmals einen Überblick über die wesentlichen Funktionsteile der Freischaltkupplung (K2) und verdeutlicht deren geometrische Zuordnung.

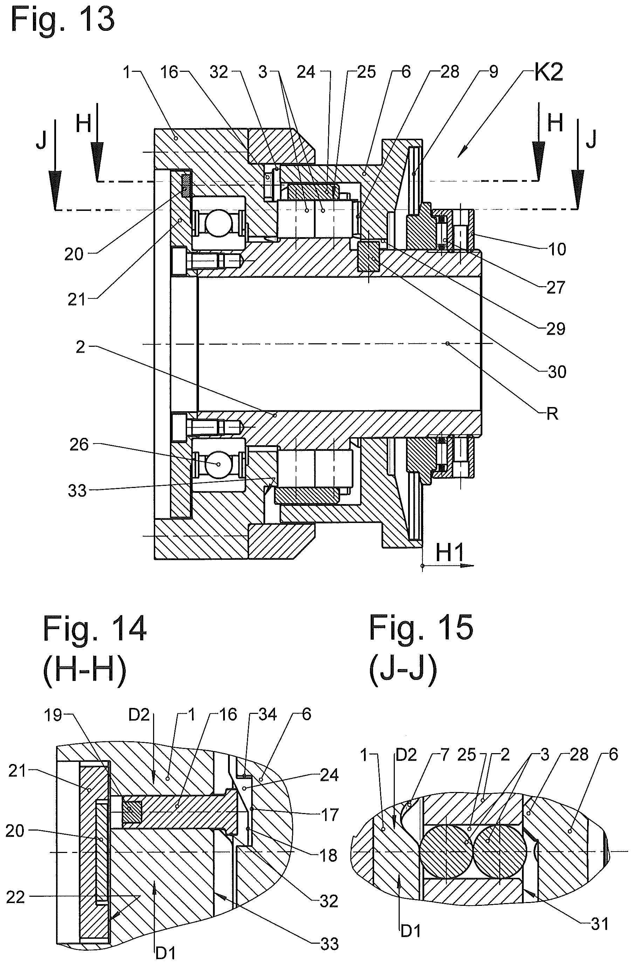

Im Folgenden wird beschrieben, wie die Freischaltkupplung (K2) vom eingerasteten Zustand in den aus den **Fig. 13, Fig. 14** und **Fig. 15** ersichtlichen ausgerasteten Zustand überführt wird.

Beim Ausrasten der Freischaltkupplung (K2) infolge eines unzulässig überhöhten Drehmoments kommt es zu einer Verdrehung des Druckflansches (1) zur Kupplungsnabe (2) in die erste Drehrichtung (D1), wodurch sich die Übertragungskörper (3) in einer Abwälz-Bewegung aus den keilförmigen Ausnehmungen (7) des Druckflansches (1) herausbewegen und das Schaltteil (6) eine Hubbewegung (H1) gegen die Kraft der Federelemente (9) in Richtung zur Einstellmutter (10) hin vollführt.

Dadurch, dass sich in jeder der Nabenausnehmungen (25) eine gerade Anzahl von Übertragungskörpern (3) befindet, wird die Abwälzbewegung zwischen dem Druckflansch (1) und den Übertragungskörpern (3) über die Schaltteilnocken (28) in der Weise auf das Schaltteil (6) übertragen, dass sich der Druckflansch (1) und das Schaltteil (6) in die gleiche erste Drehrichtung (D1) in Bezug zur Kupplungsnabe (2) verdrehen. Die Verdrehung zwischen dem Schaltteil (6) und der Kupplungsnabe (2) wird durch das eingangs erwähnte (zwischen den Federelementen (9) und der Einstellmutter (10) angeordnete) Drucklager (27) erleichtert.

Durch die beschriebene gleichzeitig stattfindende Hubbewegung (H1) und Drehbewegung des Schaltteiles (6) in Bezug zur Kupplungsnabe (2) kommen die Schaltteilnocken (28) wie im Stand der Technik bekannt mit den Nabenausnehmungen (25) außer Eingriff, das Schaltteil (6) verdreht sich zur Kupplungsnabe (2) bis der Schaltteilanschlag (29) am Anschlagkörper (30) der Kupplungsnabe (2) anliegt und bis letztendlich die Schaltteilnocken (28) die Kraft der Federelemente (9) auf der Abstützfläche (31) der Kupplungsnabe (2) abstützen.

In diesem ausgerasteten Zustand der Freischaltkupplung (K2) werden die Übertragungskörper (3) nicht mehr durch die Federelemente (9) in die Ausnehmungen (7) des Druckflansches (1) gedrückt, wodurch der Druckflansch (1) und die Kupplungsnabe (2) zueinander frei auslaufen können.

Gleichzeitig ist durch das Zusammenwirken von Schaltteilanschlag (29) und Anschlagkörper (30) gemäß Fig. 11 sichergestellt, dass die Schaltteilnocken (28) nicht in die in die erste Drehrichtung (D1) nächstgelegene Nabenausnehmung (25) eintauchen können.

Beim Auslaufen der Freischaltkupplung (K2) ist das Schaltteil (3) in die dargestellte erste Drehrichtung (D1) zur Kupplungsnabe (2) verdreht und die Schaltteilnocken (28) stützen sich auf der Abstützfläche (31) der Kupplungsnabe (2) ab.

Gleichzeitig dreht sich der Druckflansch (1) ebenfalls in die dargestellte erste Drehrichtung (D1) zur Kupplungsnabe (2), wobei die Übertragungskörper (3) ohne Kraftbeaufschlagung in den Nabenausnehmungen (25) liegen und wobei sich folglich die Ausnehmungen (7) des Druckflansches (1) frei unter den Übertragungskörpern (3) hindurchbewegen. Zusammen mit dem Druckflansch (1) bewegen sich die mit Bolzenmagneten (19) bestückten Steuerbolzen (16) an der mit der Kupplungsnabe (2) fest verbundenen Steuerscheibe (21) vorbei.

Im Bereich der in die Steuerscheibe (21) erfindungsgemäß eingebetteten Steuermagnete (20) werden die damit zusammenwirkenden Bolzenmagnete (19) von diesen abgestoßen und die Steuerbolzen (16) kommen entsprechend beaufschlagt mit ihrem Bolzenansatz (32) mit den Steuerkurven (18) des mit der Kupplungsnabe (2) fest verbundenen Halteringes (24) und mit den Steuernuten (17) des Schaltteiles (6) in Kontakt.

Die Bolzenansätze (32) der Steuerbolzen (16) tauchen dabei in die Steuernuten (17) des Schaltteiles (6) ein und werden durch die Rampen der Steuerkurven (18) wieder aus den Steuernuten (17) herausgeführt, wie dies für sich betrachtet aus dem Stand der Technik bekannt ist.

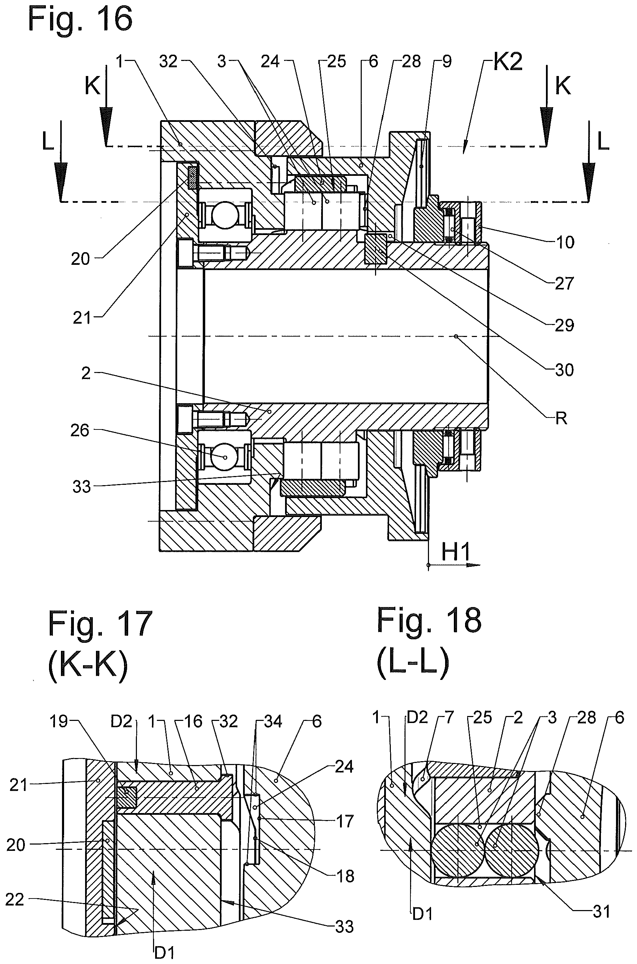

In den **Fig. 16 -18** ist letztlich dargestellt wie die Steuerbolzen (16) durch die weitere Verdrehung des Druckflansches (1) in die erste Drehrichtung (D1) den Umfangs-Bereich verlassen, in dem die Bolzenmagnete (19) den Steuermagneten (20) gegenüberstehen und von letzterem abstoßend beaufschlagt werden können. Die Steuerbolzen (16) mit den Bolzenmagneten (19) werden dann von der aus einem ferromagnetischen Werkstoff bestehenden Steuerscheibe (21) angezogen bis der Bolzenansatz (32) an der Druckflanschfläche (33) anliegt; d.h. die Steuerbolzen 16 werden so von den Steuerkurven (18) und Steuernuten (17) weggezogen und auf Abstand gehalten. Dabei ist es wichtig, dass die Länge der Steuerbolzen (16), die axiale Erstreckung des Bolzenansatzes (32) und die axiale Lage der Druckflanschfläche (33) so aufeinander abgestimmt sind, dass eine Berührung zwischen den Bolzenmagneten (19) und der Steuerscheibe (21) mit den Steuermagneten (20) sicher ausgeschlossen ist.

Zur Wiedereinrastung der Freischaltkupplung (K2) wird die Drehrichtung des Druckflansches (1) in Bezug zur Kupplungsnabe (2) in die dargestellte zweite Drehrichtung (D2) (siehe Fig. 17/18) umgekehrt, wie dies aus **Fig. 14, Fig. 15****,** **Fig. 17** und **Fig. 18** ersichtlich ist.

Wenn dabei die Bolzenmagnete (19) der Steuerbolzen (16) den als Rechteckmagnete ausgeführten Steuermagneten (20) gegenüberstehen bzw. mit diesen in Umfangsrichtung fluchten, werden die Steuerbolzen (16) zu den Steuerkurven (18) des Halteringes (24) und den Steuernuten (17) des Schaltteiles (6) beaufschlagt bzw. verschoben und die Bolzenansätze (32) tauchen in die Steuernuten (17) ein.

Bei weiterer Verdrehung des Druckflansches (1) in die zweite Drehrichtung (D2) kommen die Bolzenansätze (32) mit den Nutflanken (34) in Kontakt und das Schaltteil (6) wird in Bezug zur Kupplungsnabe (2) wieder in die Ausgangslage verdreht. Dadurch tauchen die Schaltteilnocken (28) wieder in die Nabenausnehmungen (25) der Kupplungsnabe (2) ein und übertragen die Kraft der Federelemente (9) wieder auf die in den Ausnehmungen (7) des Druckflanschs (1) liegenden Übertragungskörper (3).

Die Freischaltkupplung (K2) ist dadurch wieder betriebsbereit und kann wieder das volle durch die Kraft der Federdruckelemente (9) definierte Drehmoment übertragen.

Die anhand der Zeichnungen beschriebenen Freischaltkupplungen (K1, K2) sind weitgehend symmetrisch aufgebaut, so dass sie in beide Drehrichtungen (D1, D2) betrieben werden können und so dass die Wiedereinrastung mit langsamer Geschwindigkeit immer entgegengesetzt zur Drehrichtung der vorhergegangenen Ausrastung erfolgt.

Bei der anhand der **Fig. 7** bis **Fig. 18** beschriebenen Freischaltkupplung (K2) mit Übertragungskörpern (3) in Form von Zylinderrollen ist es auch denkbar, die Zylinderrollen durch Kugeln oder andere rotationssymmetrische Körper zu ersetzen. Dabei können die Nabenausnehmungen (25) dann in vorteilhafter Weise an die Form der Übertragungskörper (3) angepasst und bei Verwendung von Kugeln als Übertragungskörper (3) beispielsweise als axial ausgerichtete und parallel zur Rotationsachse (R) verlaufende Bohrungen in der Kupplungsnabe (2) ausgeführt werden.

### Bezugszeichenliste:

- 1: Druckflansch
- 2: Kupplungsnabe
- 3: Übertragungskörper Kugeln bei Kupplung K1, Rollen bei Kupplung K2
- 4: Käfig
- 5: Nabenverzahnung
- 6: Schaltteil
- 7: Ausnehmung des Druckflansches
- 8: Ausnehmung des Schaltteiles
- 9: Federelement
- 10: Einstellmutter
- 11: Stützkörper
- 12: Stützkörperausnehmung
- 13: Abstützausnehmung
- 14: Axiallager
- 15: Zusatzausnehmung
- 16: Steuerbolzen
- 17: Steuernut
- 18: Steuerkurve
- 19: Bolzenmagnet
- 20: Steuermagnet
- 21: Steuerscheibe
- 22: Steuerfläche
- 23: Rückhaltemagnet
- 24: Haltering
- 25: Nabenausnehmung
- 26: Kupplungslager
- 27: Drucklager
- 28: Schaltteilnocke
- 29: Schaltteilanschlag
- 30: Anschlagkörper
- 31: Abstützfläche
- 32: Bolzenansatz
- 33: Druckflanschfläche
- 34: Nutflanke

- D1: Erste Drehrichtung
- D2: Zweite Drehrichtung
- K1: Kupplung aufbauend auf DE3727484C2
- K2: Kupplung aufbauend auf neuartigem Rollen-Konzept
- R: Rotationsachse
- H1: Hubbewegung des Schaltteiles

## Patentansprüche

1. Formschlüssig arbeitende Freischalt-Überlastkupplung,
- mit einer Kupplungsnabe (2), mit einem Schaltteil (6) und einem auf der Kupplungsnabe (2) drehbar gelagerten und mit axial gerichteten Ausnehmungen (7) versehenen Druckflansch (1),
- wobei auf einem Teilkreis rotationssymmetrische Übertragungskörper (3) angeordnet sind, die durch die Kraft von Federelementen (9) in den Ausnehmungen (7) des Druckflansches (1) gehalten werden und die dadurch ein Drehmoment vom Druckflansch (1) auf die Kupplungsnabe (2) übertragen,
- wobei die Kupplung durch eine Überlast zwischen Kupplungsnabe (2) und Druckflansch (1) in eine erste Drehrichtung D1 von einem eingerasteten Zustand in einen freigeschalteten Zustand überführbar ist,
- wobei die Wiedereinrastung der Kupplung durch eine Verdrehung zwischen Kupplungsnabe (2) und Druckflansch (1) in eine zweite entgegen gerichtete Drehrichtung D2 erfolgt, und
- wobei die Wiedereinrastung der Kupplung durch das Zusammenspiel zwischen den in axial gerichteten Durchbrüchen des Druckflansches (1) angeordneten Steuerbolzen (16), den mit der Kupplungsnabe (2) drehfest verbundenen Steuerkurven (18) und weiteren Steuernuten (17) mit Nutflanken (34) erfolgt,
**dadurch gekennzeichnet, dass** die Steuerbolzen (16) im Druckflansch (1) mit Bolzenmagneten (19) bestückt sind, die von mit der Kupplungsnabe (2) fest verbundenen Steuermagneten (20) auf einer Steuerscheibe (21) mit einer Kraft beaufschlagt werden, die die Steuerbolzen (16) mit den mit der Kupplungsnabe (2) drehfest verbundenen Steuerkurven (18) und den Steuernuten (17) in Eingriff bringen.

2. Formschlüssig arbeitende Freischalt-Überlastkupplung nach Anspruch 1, **dadurch gekennzeichnet, dass**
- für die Drehmomentübertragung in der Kupplungsnabe (2) auf einem Teilkreis axial gerichtete Nabenausnehmungen (25) angeordnet sind, in denen jeweils eine gerade Anzahl rotationssymmetrischer Übertragungskörper (3) in axialer Richtung hintereinander liegen,
- dass die in den Nabenausnehmungen (25) liegenden Übertragungskörper (3) über Schaltteilnocken (28) des Schaltteiles (6) mit der Kraft der Federelemente (9) beaufschlagt werden, und
- dass die Schaltteilnocken (28) im eingerasteten Zustand der Kupplung axial in die Nabenausnehmungen (25) eingreifen.

3. Formschlüssig arbeitende Freischalt-Überlastkupplung nach den Ansprüchen 1 und / oder 2, **dadurch gekennzeichnet, dass** die Steuernuten (17) für das Zusammenwirken von Steuerbolzen (16), Steuerkurven (18) und Steuernuten (17) beim Wiedereinrasten der Kupplung auf dem Schaltteil (6) angeordnet sind.

4. Formschlüssig arbeitende Freischalt-Überlastkupplung nach Anspruch 1, **dadurch gekennzeichnet, dass** sich für die Drehmomentübertragung auf einer axial gerichteten Nabenverzahnung (5) der Kupplungsnabe (2) ein mit dieser drehfest und axial bewegliches Schaltteil (6) befindet, wobei für die Drehmomentübertragung auf einem Teilkreis in einem Käfig (4) geführte Übertragungskörper (3) angeordnet sind, die durch die Kraft von Federelementen (9) in den einander gegenüberliegenden Ausnehmungen (7,8) von Druckflansch und Schaltteil (6) gehalten werden.

5. Formschlüssig arbeitende Freischalt-Überlastkupplung nach den Ansprüchen 1 und 4, **dadurch gekennzeichnet, dass** die Steuernuten (17) für das Zusammenwirken von Steuerbolzen (16), Steuerkurven (18) und Steuernuten (17) beim Wiedereinrasten der Kupplung auf dem Käfig (4) angeordnet sind.

6. Formschlüssig arbeitende Freischalt-Überlastkupplung nach mindestens einem der vorhergehenden Ansprüche, **dadurch gekennzeichnet, dass** die Steuermagnete (20) auf einem Teilkreis auf der Planfläche einer mit der Kupplungsnabe (2) fest verbundenen Steuerscheibe (21) angeordnet sind.

7. Formschlüssig arbeitende Freischalt-Überlastkupplung nach mindestens einem der vorhergehenden Ansprüche, **dadurch gekennzeichnet, dass** die auf dem Teilkreis der Steuermagneten (20) liegende Planfläche der Steuerscheibe (21) aus einem ferromagnetischen Werkstoff besteht.

8. Formschlüssig arbeitende Freischalt-Überlastkupplung nach mindestens einem der vorhergehenden Ansprüche, **dadurch gekennzeichnet, dass** auf der Planfläche der Steuerscheibe (21) auf dem Teilkreis der Steuermagnete (20) in Umfangsrichtung zu diesen versetzt Rückhaltemagnete (23) angeordnet sind, die so gepolt sind, dass sie die Bolzenmagnete (19) anziehen.

9. Formschlüssig arbeitende Freischalt-Überlastkupplung nach mindestens einem der vorhergehenden Ansprüche,
**dadurch gekennzeichnet, dass** die Anordnung zum Wiedereinrasten der Kupplung bestehend aus Steuerbolzen (16), Steuermagnet (20), Steuerkurve (18) und Steuernut (17) mindestens einmal am Umfang der Kupplung angeordnet ist.

10. Formschlüssig arbeitende Freischalt-Überlastkupplung nach mindestens einem der vorhergehenden Ansprüche, **dadurch gekennzeichnet, dass** die Anordnung zum Wiedereinrasten der Kupplung bestehend aus Steuerbolzen (16), Steuermagnet (20), Steuerkurve (18) und Steuernut (17) mehrfach am Umfang der Kupplung angeordnet ist.

## Claims

1. Interlocking disengaging overload clutch,
with a clutch hub (2), with a switch element (6) and with a pressure flange (1) having axially aligned recesses (7) rotationally mounted on the clutch hub (2),
wherein rotationally symmetrical transmission bodies (3) are arranged on a reference circle, these being held in recesses (7) of the pressure flange (1) through the force of spring elements (9) and thereby transmit a torque from pressure flange (1) to the clutch hub (2),
whereby the clutch is transferred from an engaged condition to a disengaged condition through an overload between clutch hub (2) and pressure flange (1) in a first rotational direction (D1),
whereby re-engagement of the clutch follows from a rotation between clutch hub (2) and pressure flange (1) in a second opposite rotational direction (D2), and
wherein the re-engagement of the clutch follows from the interaction between control pins (16) arranged in axially oriented openings of the pressure flange (1), control cams (18) rotationally securely fastened to the clutch hub (2) and further control grooves (17) with groove flanks (34), **characterized in that** the control pins (16) in pressure flange (1) are fitted with pin magnets (19) which are impinged upon a force by control magnets (20) located on a control plate (21) and firmly mounted on the clutch hub (2), which magnets bring the control pins (16) into engagement with the control cams (18) and the control groves (17) which are rotationally connected to the clutch hub (2).

2. The interlocking disengaging overload clutch according to claim 1, **cha**
**racterized in that**
for torque transmission axially oriented hub recesses (25) are arranged in the clutch hub (2) on a reference circle, in each lying an even number of rotationally symmetrical transmission bodies (3) placed one behind another in the axial direction,
that the transmission bodies (3) situated in the hub recesses (25) are impinged on by the force of the spring elements (9) through switch element lobes (28) of the switch element (6), and
that in the engaged condition of the clutch the switching element lobes (28) axially mesh with the hub recesses (25).

3. Interlocking disengaging overload clutch according to claims 1 and/or 2, **characterized in that** the control grooves (17) for the interaction of control pins (16), control cams (18) and control grooves (17) on re-engagement of the clutch are arranged on the switch element (6).

4. Interlocking disengaging overload clutch according to claim 1, **characterized in that** that for torque transmission to an axially arranged hub toothing (5) of the clutch hub (2) a with this rotationally secured and axially movable switch element (6) is arranged, wherein transmission bodies (3) for torque transmission are arranged in a reference circle and positioned in a cage (4) and are held in positionally opposed recesses (7, 8) of the pressure flange and switch element by the force of spring elements (9).

5. Interlocking disengaging overload clutch according to claims 1 and 4, **characterized in that** control grooves (17) for the interaction upon re-engagement of the clutch between control pins (16), control cams (18) and control grooves (17) are arranged on the cage (4).

6. Interlocking disengaging overload clutch according to at least one of the previous claims, **characterized in that** the control magnets (20) are arranged on a reference circle on the face of a control plate (21) fixed securely to the clutch hub (2).

7. Interlocking disengaging overload clutch according to at least one of the previous claims, **characterized in that** the face of the control plate (21) lying on the reference circle of the control magnets (20) is composed of a ferromagnetic material.

8. Interlocking disengaging overload clutch according to at least one of the previous claims, **characterized in that** retention magnets (23) are arranged on the face of the control plate (21) on the reference circle of the control magnets (20) and displaced from these in the circumferential direction, which are poled such that they attract the pin magnets (19).

9. Interlocking disengaging overload clutch according to at least one of the previous claims, **characterized in that** the arrangement for re-engagement of the clutch comprising control pins (16), control magnet (20), control cam (18) and control groove (17) is arranged at least once on the circumference of the clutch.

10. Interlocking disengaging overload clutch according to at least one of the previous claims, **characterized in that** the arrangement for re-engagement of the clutch comprising control pins (16), control magnet (20), control cam (18) and control groove (17) is arranged multiple times on the circumference of the clutch.

## Revendications

1. Accouplement à surcharge libérable fonctionnant par complémentarité de forme,
- avec un moyeu d'accouplement (2), avec une partie de commutation (6) et une bride de pression (1) montée de manière à pouvoir tourner sur le moyeu d'accouplement (2) et pourvue d'évidements (7) dirigés axialement,
- dans lequel sont disposés sur un cercle primitif des corps de transmission (3) symétriques en rotation, qui sont maintenus par la force d'éléments de ressort (9) dans les évidements (7) de la bride de pression (1) et qui transmettent de ce fait un couple de rotation de la bride de pression (1) sur le moyeu d'accouplement (2),
- dans lequel l'accouplement est transférable par une surcharge entre le moyeu d'accouplement (2) et la bride de pression (1) dans une première direction de rotation D1 d'un état enclenché dans un état libéré,
- dans lequel le réenclenchement de l'accouplement est effectué par une rotation entre le moyeu d'accouplement (2) et la bride de pression (1) dans une deuxième direction de rotation D2 dirigée en sens inverse, et
- dans lequel le réenclenchement de l'accouplement est effectué par la collaboration entre les boulons de commande (16) disposés dans des ajours de la bride de pression (1) dirigés axialement, les cames de commande (18) reliées de manière solidaire en rotation au moyeu d'accouplement (2) et d'autres rainures de commande (17) avec des flancs de rainure (34),
**caractérisé en ce que** les boulons de commande (16) dans la bride de pression (1) sont équipés d'aimants de boulon (19), qui sont soumis à l'action d'une force par les aimants de commande (20), reliés de manière solidaire au moyeu d'accouplement (2), sur un disque de commande (21), qui amènent en prise les boulons de commande (16) avec les cames de commande (18) reliées de manière solidaire en rotation au moyen d'accouplement (2) et avec les rainures de commande (17) .

2. Accouplement à surcharge libérable fonctionnant par complémentarité de forme selon la revendication 1, **caractérisé en ce que**
- pour la transmission de couple de rotation dans le moyeu d'accouplement (2), des évidements de moyeu (25) dirigés axialement sont disposés sur un cercle primitif, dans lesquels respectivement un nombre pair de corps de transmission (3) symétriques en rotation se trouvent les uns derrière les autres dans une direction axiale,
- les corps de transmission (3) se trouvant dans les évidements de moyeu (25) sont soumis à l'action de la force des éléments de ressort (9) par l'intermédiaire de ergots de partie de commutation (28) de la partie de commutation (6), et
- les ergots de partie de commutation (28) viennent en prise axialement avec les évidements de moyeu (25) dans l'état enclenché de l'accouplement.

3. Accouplement à surcharge libérable fonctionnant par complémentarité de forme selon les revendications 1 et/ou 2, **caractérisé en ce que** les rainures de commande (17) sont disposées sur la partie de commutation (6) pour la coopération de boulons de commande (16), de cames de commande (18) et de rainures de commande (17) lors du réenclenchement de l'accouplement.

4. Accouplement à surcharge libérable fonctionnant par complémentarité de forme selon la revendication 1, **caractérisé en ce que** se trouve une partie de commutation (6) mobile de manière solidaire en rotation et axialement avec le moyeu d'accouplement, pour la transmission de couple de rotation, sur une denture de moyeu (5) dirigée axialement du moyeu d'accouplement (2), dans lequel pour la transmission de couple de rotation, des corps de transmission (3) guidés dans une cage (4) sont disposés sur un cercle primitif, qui sont maintenus par la force d'éléments de ressort (9) dans les évidements (7, 8) opposés les uns aux autres de la bride de pression et de la partie de commutation (6).

5. Accouplement à surcharge libérable fonctionnant par complémentarité de forme selon les revendications 1 et 4, **caractérisé en ce que** les rainures de commande (17) sont disposées sur la cage (4) pour la coopération de boulons de commande (16), de cames de commande (18) et de rainures de commande (17) lors du réenclenchement de l'accouplement.

6. Accouplement à surcharge libérable fonctionnant par complémentarité de forme selon au moins l'une des revendications précédentes, **caractérisé en ce que** les aimants de commande (20) sont disposés sur un cercle primitif sur la surface plane d'un disque de commande (21) relié de manière solidaire au moyeu d'accouplement (2) .

7. Accouplement à surcharge libérable fonctionnant par complémentarité de forme selon au moins l'une des revendications précédentes, **caractérisé en ce que** la surface plane, située sur le cercle primitif des aimants de commande (20), du disque de commande (21) est constituée d'un matériau ferromagnétique.

8. Accouplement à surcharge libérable fonctionnant par complémentarité de forme selon au moins l'une des revendications précédentes, **caractérisé en ce que** des aimants de retenue (23), qui sont polarisés de telle sorte qu'ils attirent les aimants de boulon (19) sont disposés sur la surface plane du disque de commande (21), sur le cercle primitif des aimants de commande (20), dans la direction périphérique, de manière décalée par rapport à ces derniers.

9. Accouplement à surcharge libérable fonctionnant par complémentarité de forme selon au moins l'une des revendications précédentes,
**caractérisé en ce que** l'ensemble servant à réenclencher l'accouplement constitué d'un boulon de commande (16), d'un aimant de commande (20), d'une came de commande (18) et d'une rainure de commande (17) est disposé au moins une fois au niveau de la périphérie de l'accouplement.

10. Accouplement à surcharge libérable fonctionnant par complémentarité de forme selon au moins l'une des revendications précédentes, **caractérisé en ce que** l'ensemble servant à réenclencher l'accouplement constitué d'un boulon de commande (16), d'un aimant de commande (20), d'une came de commande (18) et d'une rainure de commande (17) est disposé à multiples reprises au niveau de la périphérie de l'accouplement.
